Europäisches Patentamt

(19) **European Patent Office**

**Office européen des brevets**

(11) Publication number: **0 061 129**
**B2**

(12) # NEW EUROPEAN PATENT SPECIFICATION

(45) Date of publication of the new patent specification: 28.02.90

(21) Application number: 82102130.0

(22) Date of filing: 16.03.82

(51) Int. Cl. ⁵: **H 02 B 11/04**

(54) Shutter device for metal-enclosed switchgear.

(30) Priority: 18.03.81 JP 37948/81

(43) Date of publication of application:
29.09.82 Bulletin 82/39

(45) Publication of the grant of the patent:
28.08.85 Bulletin 85/35

(45) Mention of the opposition decision:
28.02.90 Bulletin 90/09

(84) Designated Contracting States:
DE FR GB

(56) References cited:
US-A-3 015 756
US-A-3 213 222

PATENTS ABSTRACTS OF JAPAN, vol. 2, no. 90, 22nd
July 1978, page 4159E78;

"Normalschaltanlagen mit ausfahrbaren Geräten", Fa
Felten & Guilleaume Carlswerke AG, Nr. E-62.2d10.1,
2/79

(73) Proprietor: Hitachi, Ltd.
5-1, Marunouchi 1-chome
Chiyoda-ku Tokyo 100 (JP)

(72) Inventor: Matsuzaki, Atsuhide
5-17-4, Suwacho-4-chome
Hitachi-shi (JP)
Inventor: Ida, Mitsuyoshi
2-13-12, Mizukicho
Hitachi-shi (JP)

(74) Representative: Finck, Dieter
Patentanwälte v. Füner, Ebbinghaus, Finck
Mariahilfplatz 2 & 3
D-8000 München 90 (DE)

EP 0 061 129 B2

## Background of the Invention

The present invention relates to a shutter device for metal-enclosed switchgear and concerns an improvement in positioning of a fulcrum for an actuating lever for opening and closing the shutter device.

In general, a metal-enclosed switchgear comprises a circuit breaker of the drawout type adapted to be detachably inserted into a switch box so as to contact the disconnecting contacts provided in the switch box, where one group of which is connected to the source side and another to the load side.

Thereby it is possible to selectively close or disconnect the electric connection between the source side and the load side. For inspecting the equipments/devices in the switch box or the circuit breaker, the circuit breaker is withdrawn from the switch box so that the live disconnecting contacts are exposed dangerously. Therefore, in order to avoid any accidental contact, a shutter device is provided in the switchgear to cover the disconnecting contacts when the circuit breaker is withdrawn from the switch box and to uncover the same during the insertion of the circuit breaker into the switch box.

A shutter device is known from US-A-3 015 756, which comprises shutters to cover and uncover the disconnecting contacts and a rod supporting the shutters. The rod is secured to one end of an actuating lever supported by a fulcrum or pivot secured to the base of the switch box. The actuating lever is adapted to make an engagement with an operating roller provided on the circuit breaker. The arrangement is such that, as the circuit breaker is inserted into and withdrawn from the switch box, the actuating lever is rotated up and down around the fulcrum so that the shutters are also moved up and down to cover and uncover the disconnecting contacts. In order to obtain a large vertical stroke of the shutter device, in general the fulcrum is located at the outer end of the actuating lever, i. e. at an opposite end remote from the shutter to provide a large distance between the fulcrum and the shutters. For making an inspection of the disconnecting contacts on the source or load side, such as measurement of the insulation resistance after the withdrawal of the circuit breaker, the operater has to uncover the disconnecting contacts. This action requires a considerable force because the fulcrum is located at the outer end of the actuating lever facing to the side of the entrance of the switch box.

A shutter device is known in accordance with the prior art portion of claim 1 (prospectus entitled "Normalschaltanlagen mit ausfahrbaren Geräten" of Felten & Guilleaume Carlswerk AG). This shutter device has a similar construction as the shutter device mentioned above. Additionally, the fulcrum attached to the wall of the switch box via a frame is disposed at a position balanced between the opposite ends of the actuating lever, wherein the operating device being adapted to slide between the fulcrum and the outer end of the actuating lever.

A further shutter device is known from US-A-3 213 222 in which the fulcrum is disposed between the ends of the actuating lever and the operating device is adapted to slide between the fulcrum and the inner end of the actuating lever.

## Summary of the Invention

Accordingly, it is an object of the invention to provide a shutter device for a metal-enclosed switchgear improved to ensure that the time required for raising the shutters can be minimized.

This object is solved by the features of claim 1. Further developments of the shutter device according to the invention are subject of the claims 2 to 6.

According to the invention, there is provided a shutter device in which the actuating lever is provided between said fulcrum and the outer end with a portion raising above a portion between said fulcrum and the inner end of the actuating lever.

## Brief Description of the Drawings

Fig. 1    is a sectional side elevational view of a metal enclosed switchgear incorporating a shutter device embodying the present invention;

Fig. 2    is a sectional side elevational view of a shutter device;

Fig. 3    is a side elevational view of an actuating lever;

Figs. 4   and 5 are side elevational views of further embodiments of the actuating lever;

Fig. 6A   is a sectional plan view of a latching mechanism; and

Figs. 6B  and 6C are side elevational partial views of the actuating lever.

## Description of the Preferred Embodiments

An embodiment of the invention will be explained hereinunder with reference to the accompanyingd drawings.

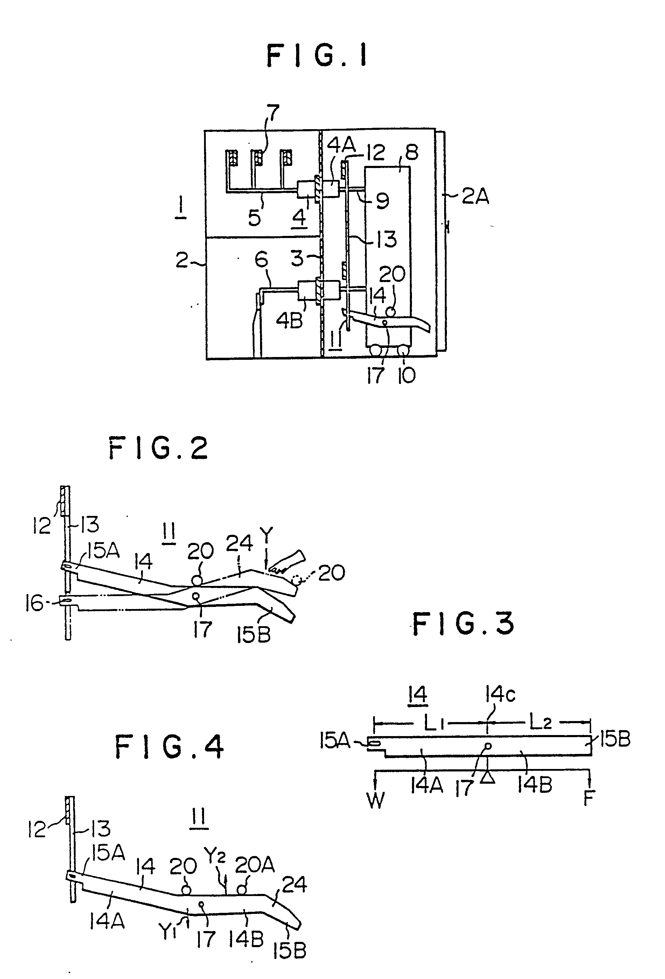

Fig. 1 shows a metal-enclosed switchgear 1 to which the present invention is applied. The metal-enclosed switchgear 1 has a switch box 2 which is provided at its one side with an entrance adapted to be opened and closed by means of a door 2A. A partition wall 3 is mounted in the switch box 2. An upper disconnecting contact 4A secured to the partition wall 3 is connected to source-side conductors 5 having three phases, while a lower disconnecting contact 4B also secured to the partition wall 3 is connected to loadside conductors 6 having three phases. The source-side conductors 5 are connected to source bus 7 while the loadside conductors 6 are connected to a load which is not shown. These disconnecting contacts 4A, 4B are adapted to be contacted at their outer sides by disconnecting contacts 9 of a circuit breaker 8. The circuit breaker 8 is provided with wheels 10 by means of which it is easily moved into the switch box to connect the contacts 9 with the disconnecting contacts 4A and 4B. As the circuit breaker 8 is withdrawn from the breaker compartment, the contacts 9 are electrically separated from the stationary disconnecting contacts 4A and 4B to expose the disconnecting contacts 4A and 4B one or both of which are charged electrically to high voltage. In order to avoid accidental contact with the disconnecting contacts, a shutter device 11 is provided to cover and uncover the disconnecting contacts in accordance with withdrawal and insertion of the circuit breaker into the switch box.

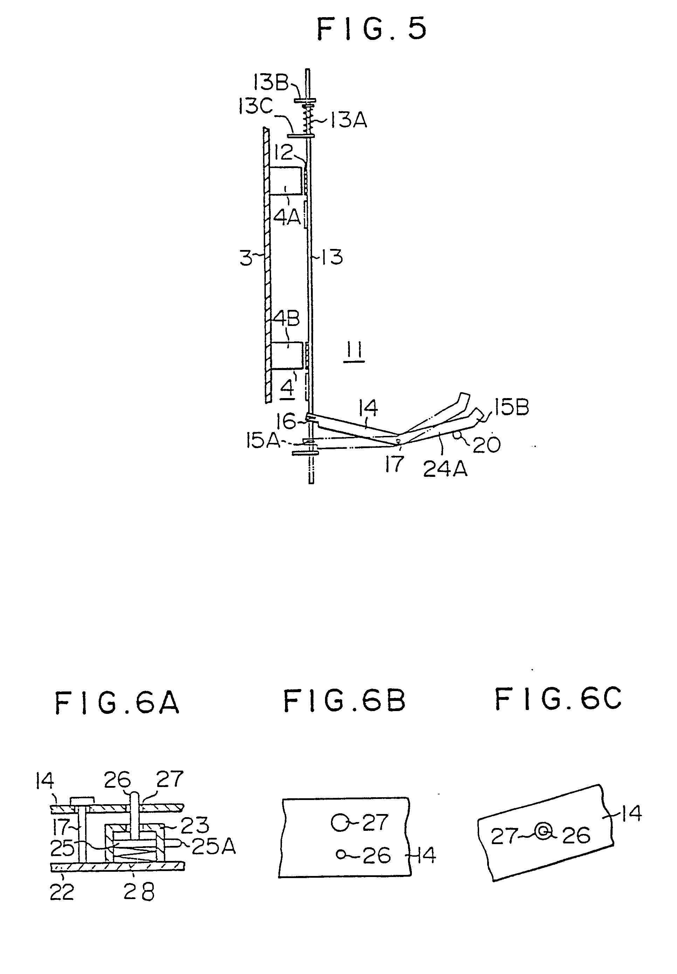

The detail of the shutter device 11 will be explained hereinunder with reference to Fig. 2. The shutter device 11 has shutters 12 adapted for covering the disconnecting contacts 4A, 4B and secured to a rod 13 in a constant distance. The rod 13 is fixed by means of a fixing means 16 to the inner end 15A of an actuating lever 14 adjacent to the rod 13. The actuating lever 14 extends along the side wall of the switch box. The side wall is marked with reference number 22 in Fig. 6. The actuating lever 14 is rotatably supported by a fulcrum 17 fixed to the side wall of the switch box. Therefore, as the outer end 15B of the actuating lever 14 facing to the side of the entrance is raised and lowered, the actuating lever 14 is moved up and down around the fulcrum 17, so that the shutters 12 uncover and cover the disconnecting contacts 4A, 4B.

The position of the fulcrum 17 will be explained with reference to Fig. 3. The length of the first portion 14A of the operating lever 14, bounded by the inner end 15A and the fulcrum 17, is represented by $l_1$, while the length of the second portion 14B of the lever bounded by the fulcrum 17 and the outer end 15B is represented by $l_2$. Representing the total weight of the shutter 12 and the rod 13 by W and the force applied to the outer end 15B by F, the position of the fulcrum is selected to meet the following condition:

$$A < B \qquad (1)$$

where A represents the product of the length $l_1$, and the weight W, while B represents the product of the length $l_2$ and the force F.

In other words, the fulcrum is located at a point which permits the first portion 14A of the actuating lever 14 to descend under the combined weights of the shutters 12 and the rod. This position of fulcrum is usually located at a point 14C near the mid point of the actuating lever.

The circuit breaker 8 is provided with an operating roller 20 adapted to engage the upper surface of the actuating lever 14 to rotate the actuating lever 14 up and down around the fulcrum 17 in accordance with the insertion and withdrawal of the circuit breaker 8 into and out of the switch box. In other words, the operating roller 20 slides on the upper surface of the second portion 14B.

By positioning the fulcrum 17 at a point 14C substantially coinciding with the mid point of the actuating lever, the aforementioned product A takes a value greater than the product B when the circuit breaker 8 has been withdrawn from the breaker compartment. Namely, the moment of rotation acting on the first portion 14A of the actuating lever 14 is greater than that on the second portion 14B by an amount corresponding to the total weight of the shutters 12 and the rod 13. Therefore, a balance of moment is obtained when the actuating lever takes the position illustrated by chain line in which the first portion 14A is lowered while the second portion 14B is raised around the fulcrum 17. In this state, the disconnecting contacts are covered by the shutters 12.

As the operator applies a force F to the outer end 15B of the actuating lever in the direction of the arrow Y, the product B assumes a value greater than the product A. In consequence, the second portion 14B is rotated downward while the first portion 14A is rotated upward around the fulcrum 17, so that the actuating lever takes a position shown by solid line in Fig. 2. In consequence, the shutters 12 are moved upward to uncover the disconnecting contacts. As has been described, the balance of moment is maintained in such a state that the first portion of the operating lever is lowered as compared with the second portion by a height corresponding to the weight of the shutters and the rod. Therefore, as a force is applied to the second portion, the shutters are moved easily to uncover the disconnecting contacts. It is thus possible to operate the shutters with minimum manual force exerted by the operator to cover and uncover the disconnecting contacts, as desired. In addition, since the outer end 15B of the actuating lever touched by the operator is sufficiently far from the disconnecting contacts 4A, 4B, the danger of accidental contact of the human body with the electrically charged disconnecting contacts 4A, 4B is completely avoided.

Fig. 4 shows another embodiment in which an auxiliary roller 20A is mounted at a portion of the circuit breaker 8 corresponding to the second portion of the actuating lever 14 besides the aforementioned operating roller 20 mounted on the portion of the circuit breaker 8 corresponding to the first portion 14A. By so doing, it is possible to completely avoid the undesirable lowering of the shutters 12 in the operating state in which the contacts 9 of the circuit breaker 8 are held in contact with the stationary disconnecting contacts 4A, 4B. Namely, as the operating roller 20 slides to the first portion 14A of the actuating lever 14 beyond the fulcrum 17, the roller 20 acts to depress the first portion 14A of the actuating lever 14 downwardly as indicated by an arrow $Y_1$ to cause a tendency to move the second portion 14B of the same upwardly as indicated by an arrow $Y_2$. This tendency, however, is perfectly suppressed by the auxiliary roller 20A which acts to depress the second portion 14B. In this embodiment, the second portion 14B of the actuating lever 14 is provided with an upward projection 24 which rises above the level of the first portion 14A when the actuating lever 14 takes the position shown by chain line in Fig. 2. As the outer end 15B of the second projecting portion 14B is depressed, the shutters 12 are raised without delay so that it is possible to increase the speed of uncovering action of the shutters.

Fig. 5 shows still another embodiment in which the shutter device 11 is constructed to include an upward projection 24A, and a tension spring 13A which pulls the rod 13 and the shutters 12 upwardly when the circuit breaker 8 is not contained in the metal-enclosed switchgear 1. The tension spring 13A is stretched between supporting tabs 13B and 13C provided on the rod 13.

The shutter device 11 of this embodiment operates in a manner explained hereinunder. Namely, as the circuit breaker 8 is moved toward the disconnecting contacts 4A, 4B, the operating roller 20 slides in contact with the lower side of the projection 24A, so that the actuating lever 14 is raised to the position shown by chain line from the position shown by solid line around the fulcrum. In consequence, the rod 13 is lowered against the tension spring 13A. In this state, the shutters 12 uncover the disconnecting contacts 4A, 4B for exposure. Conversely, as the circuit breaker 8 is withdrawn from the metal-enclosed switchgear 1, the tension spring 13A contracts to raise the rod and shutters and to take the position shown by the solid line so that the shutters 13 cover the disconnecting contacts 4A, 4B. As the operator lifts the outer end 15B, it is possible to further lower the shutters 12 to achieve the same result as the foregoing embodiments.

Figs. 6A, 6B and 6C show a further embodiment of the invention having a latching mechanism adapted to prevent an unintentional operation of the shutter due to any accidental touch on the actuating lever by the operator when the circuit breaker 8 has been withdrawn from the switch box 2. Namely, a case 23 is provided on the side wall 22 of the switch box opposing to the actuating lever 14. The case 23 accommodates a pressure plate 25 loaded by a spring 28 and a stopper 26 provided on the pressure plate 25. The stopper 26 continuously urges the actuating lever 14. As will be seen from Fig. 6B, the actuating lever 14 is provided with a through hole 27 for receiving the stopper 26.

Then, as the actuating lever 14 is moved to the position shown in Fig. 6C, the stopper 26 is inserted into the through hole 27 to prevent the rotation of the actuating lever 14.

For withdrawing the stopper 26 from the through hole 27, one end 25A of the pressure plate 25 movable in an elongated hole (not shown) in the case 23 is moved away from the actuating lever 14 to move the stopper 26 out of the through hole 27. In this embodiment, thanks to the provision of the stopper 26 which prevents the rotation of the actuating lever 14, it is possible to avoid unintentional operation of the shutters due to accidental touch of the actuating lever by the operator. When the circuit breaker 8 has been withdrawn from the switch box 2. In consequence, the danger of accidental touch of the human body with the electrically charged disconnecting contacts is completely eliminated.

Thus, according to the invention, the fulcrum of the actuating lever is disposed at a location balanced between the opposite ends of the lever and the operating device is adapted to slide between the fulcrum and the outer end of the actuating lever. In addition, since the outer end of the actuating lever at which the actuating lever is manipulated by the operator is located remote from the contact sections, the danger of accidental touch of the operator's body with the electrically charged disconnecting contacts is avoided to ensure safety during protective maintenance and inspection of the switchgear.

## Claims

1. A shutter device for a metal-enclosed switchgear (1) having a switch box (2) provided with an entrance through which an electrical apparatus (8) of the drawout type may be moved into or withdrawn from the switch box (2) and disconnecting contacts (4A, 4B) for connection and disconnection with said electrical apparatus (8), said shutter device (11) including shutters (12) for opening and closing said disconnecting contacts (4A, 4B), a vertically movable rod (13) for supporting said shutters (12), an actuating lever (14) connected to one end of said rod (13) for rotary movement around a fulcrum (17) provided on a wall of said switch box (2) to move said rod (13) up and down, which fulcrum (17) is disposed at a position balanced between the opposite ends (15A, 15B) of said actuating lever (14), and an operating device (20) provided on said electrical apparatus (8) for rotating said actuating lever (14) around its fulcrum (17) when said electrical apparatus (8) is moved into and withdrawn from said switch box (2), said operating device (20) being adapted to slide between said fulcrum (17) and the outer end (15B) of said actuating lever (14) facing to the side of said entrance, *characterized in* that said actuating lever (14) is provided between said fulcrum (17) and the outer end (15B) with a portion (24, 14B) which rises above a portion (14A) between said fulcrum (17) and the inner end (15A) of said actuating lever (14).

2. A shutter device as claimed in claim 1, *characterized in* that said shutter device (11) comprises the operating device (20) and an auxiliary operating device (20A) provided on the side wall of said electrical apparatus (8) and adapted to contact the first portion (14A) and the second portion (14B) of said actuating lever, respectively, where said fulcrum (17) being disposed between said operating devices (20, 20A).

3. A shutter device as claimed in claim 1, *charac-*

terized in that the operating device (20) is adapted to slide along the lower surface of said projecting portion (14B) and that a tension spring (13A) is provided, which is mounted on said rod (13) and extended, when said operating device (20) slides on the projecting portion (14B) to lower said rod (13).

4. A shutter device as claimed in any of the claims 1 to 3, characterized in that said operating device (20) comprises an operating roller.

5. A shutter device as claimed in claim 2, characterized in that said auxiliary operating device (20A) comprises an auxiliary roller.

6. A shutter device as claimed in any of the claims 1 to 5, characterized by a latching mechanism including a resilient member (28) mounted on the side wall (22) of said switch box (2) and a stopper (26) biased by said resilient member (28) to project into a through hole (27) formed in said actuating lever (14).

**Patentansprüche**

1. Verschlußeinrichtung für eine metallgekapselte Schaltanlage (1) mit einem Schaltkasten (2) mit einem Eingang, durch den eine elektrische Vorrichtung (8) des Ausziehtyps in den Schaltkasten (2) hineinbewegt oder aus diesem zurückgezogen werden kann, und mit Schaltstücken (4A, 4B) zum Verbinden mit und Trennen von der elektrischen Vorrichtung (8), wobei die Verschlußeinrichtung (11) Schließvorrichtungen (12) zum Öffnen und Schließen der Schaltstücke (4A, 4B), eine vertikal bewegliche Stange (13) zur Unterstützung der Schließvorrichtungen (12), einen mit einem Ende der Stange verbundenen Betätigungshebel (14) für eine Drehbewegung um einen Drehpunkt (17) an einer Wand des Schaltkastens (2), um die Stange (13) auf und ab zu bewegen, wobei der Drehpunkt (17) in einer ausbalancierten Position zwischen den entgegengesetzten Enden (15A, 15B) des Betätigungshebels (14) angeordnet ist, und einer Betätigungseinrichtung (20) an der elektrischen Vorrichtung (8) zum Drehen des Betätigungshebels (14) um seinen Drehpunkt (17) aufweist, wenn die elektrische Vorrichtung (8) in den Schaltkasten (2) bewegt und davon zurückgezogen wird, wobei die Betätigungseinrichtung (20) zwischen dem Drehpunkt (17) und dem der Seite des Eingangs zugewandten·äußeren Ende (15B) des Betätigungshebels (14) gleitend beweglich ist, dadurch gekennzeichnet, daß der Betätigungshebel (14) zwischen dem Drehpunkt (17) und dem äußeren Ende (15B) mit einem Abschnitt (24, 14B) versehen ist, der sich über einen Abschnitt (14A) zwischen dem Drehpunkt (17) und dem inneren Ende (15A) des Betätigungshebels (14) erhebt.

2. Verschlußeinrichtung nach Anspruch 1 oder 2, dadurch gekennzeichnet, daß die Verschlußeinrichtung (11) die Betätigungseinrichtung (20) und eine Zusatz-Betätigungseinrichtung (20A) aufweist, die an der Seitenwand der elektrischen Vorrichtung (8) vorgesehen und dafür eingerichtet sind, den ersten Abschnitt (14A) bzw. den zweiten Abschnitt (14B) des Betätigungshebels zu berühren, wobei der Drehpunkt (17) zwischen den Betätigungseinrichtungen (20, 20A) angeordnet ist.

3. Verschlußeinrichtung nach Anspruch 1, dadurch gekennzeichnet, daß die Betätigungseinrichtung (20) längs der unteren Oberfläche des vorspringenden Abschnitts (14B) gleitend beweglich ist, und daß eine Zugfeder (13A) vorgesehen ist, die an der Stange (13) angebracht ist und gedehnt ist, wenn die Betätigungseinrichtung (20) zum Absenken der Stange (13) an dem vorspringenden Abschnitt (14B) gleitet.

4. Verschlußeinrichtung nach einem der Ansprüche 1 bis 3, dadurch gekennzeichnet, daß die Betätigungseinrichtung (20) eine Betätigungsrolle aufweist.

5. Verschlußeinrichtung nach Anspruch 2, dadurch gekennzeichnet, daß die Zusatz-Betätigungseinrichtung (20A) eine zusätzliche Rolle aufweist.

6. Verschlußeinrichtung nach einem der Ansprüche 1 bis 5, gekennzeichnet durch einen Verriegelungsmechanismus mit einem elastischen Element (28) das an der Seitenwand (22) des Schaltkastens (2) angebracht ist, und durch ein Halteelement (26), das von dem elastischen Element (28) in eine durchgehende Bohrung (27) in dem Betätigungshebel (14) vorgespannt ist.

**Revendications**

1. Dispositif à volets de fermeture pour une installation de commutation (1) placée sous capot métallique et comportant un coffret de distribution (2) muni d'une entrée, par laquelle un appareil électrique (8) du type amovible peut être introduit dans le coffret de distribution (2) ou peut en être retiré, et des contacts de débranchement (4A, 4B) servant au raccordement et au débranchement avec ledit appareil électrique (8), ledit dispositif à volets de fermeture (11) comprenant des volets de fermeture (12) servant à ouvrir et à fermer lesdits contacts de débranchement (4A, 4B), et une tige (13), déplaçable verticalement et servant à supporter lesdits volets de fermeture (12), un levier d'actionnement (14) raccordé à une extrémité de ladite tige (13) de manière à avoir un mouvement de rotation autour d'un pivot (17) prévu sur une paroi dudit coffret de distribution (2) de manière à déplacer ladite tige (13) selon un mouvement ascendant et descendant, et un dispositif de manoeuvre (20) prévu sur ledit appareil électrique de manière à faire pivoter ledit levier d'actionnement (14) autour de son pivot

EP 0 61 129 B2

(17) lorsque ledit appareil électrique (8) est introduit dans ledit coffret de distribution (2) et en est retiré, ledit dispositif de manoeuvre (20) étant adapté pour glisser entre ledit pivot (17) et l'extrémité extérieure (15B) dudit levier de manoeuvre (14), qui est situé du côté de ladite entrée, caractérisé en ce que le levier d'actionnement (14) est disposé entre ledit pivot (17) et l'extrémité extérieure (15B) et comporte une partie (24, 14B) qui s'élève par rapport à une partie (14A) située entre ledit pivot (17) et l'extrémité intérieure (15A) du levier d'actionnement (14).

2. Dispositif à volets de fermeture selon la revendication 1, caractérisé en ce que le dispositif à volets de fermeture (11) comporte un dispositif de manoeuvre (20) et un dispositif de manoeuvre auxiliaire (20A) prévu sur la paroi latérale dudit appareil électrique (8) et apte à contacter respectivement la première partie (14A) et la seconde partie (14B) dudit levier d'actionnement, lorsque ledit pivot (17) est disposé entre lesdits dispositifs de manoeuvre (20, 20A).

3. Dispositif à volets de fermeture selon la revendication 1, caractérisé en ce que le dispositif de manoeuvre (20) peut glisser le long de la surface inférieure de ladite partie saillante (14B) et qu'il est prévu un ressort de traction (13A) qui est monté sur ladite tige (13) et est déployé lorsque ledit dispositif de manoeuvre (20) glisse sur la partie saillante (14B) de manière à abaisser ladite tige (13).

4. Dispositif à volets de fermeture selon l'une quelconque des revendications 1 à 3, caractérisé en ce que ledit dispositif de manoeuvre (20) comporte un galet d'actionnement.

5. Dispositif à volets de fermeture selon la revendication 2, caractérisé en ce que ledit dispositif de manoeuvre auxiliaire (20A) comporte un galet auxiliaire.

6. Dispositif à volets de fermeture selon l'une quelconque des revendications 1 à 5, caractérisé par un mécanisme de verrouillage comprenant un organe élastique (28) monté sur la paroi latérale (22) dudit coffret de distribution (2) et un dispositif d'arrêt (26) sollicité par ledit organe élastique (28) de manière à faire saillie à l'intérieur d'un trou traversant (27) ménagé dans ledit levier d'actionnement (14).

# F I G . I

# F I G . 2

# F I G . 3

# F I G . 4

1

# FIG. 5

# FIG.6A

# FIG.6B

# FIG.6C